# EUROPEAN PATENT APPLICATION

(11) **EP 2 636 310 A1**
(43) Date of publication of application: **11.09.2013**
(21) Application number: 11838100.3
(22) Date of filing: 04.11.2011
(51) Int. Cl.: A23B 7/153, A23L 3/28

(54) **METHOD FOR STERILIZING FRUITS AND VEGETABLES**

(30) Priority: 05.11.2010 JP 2010249053
(71) Applicant: The University of Tokushima, Tokushima-shi Tokushima 770-8501 (JP)
(72) Inventor: TAKAHASHI, Akira, Tokushima-shi Tokushima 770-8503 (JP); KINOUCHI, Yohsuke, Tokushima-shi Tokushima 770-8506 (JP); AKUTAGAWA, Masatake, Tokushima-shi Tokushima 770-8506 (JP); LIAN, Xin, 2-1, Minamijosanjima-cho, Tokushima-shi Tokushima 7708506 (JP)
(74) Representative: Hart-Davis, Jason
(86) International application number: PCT/JP2011/075493
(87) International publication number: WO 2012/060450

(57) **Abstract**

A method for sterilizing fruits and vegetables includes irradiating a surface of fruits and vegetables with UVA, while the surface of the fruits and vegetables is in contact with chlorine water containing sodium hypochlorite having a chlorine concentration of 5 ppm or more. According to the method for sterilizing fruits and vegetables, the fruits and vegetables can be quite efficiently sterilized by chlorine water having a quite low concentration, that is 5 ppm or more, slightly higher than that of tap water. Further, multiplication of bacteria in the sterilized fruits and vegetables can be effectively prevented, while a residual chlorine concentration in the sterilized fruits and vegetables is significantly reduced.

## Description

### TECHNICAL FIELD

The present invention relates to a method for optimally sterilizing fruits and vegetables that consumers can eat without water washing mainly like cut vegetables.

### BACKGROUND ART

Vegetables and fruits cut into easy-to-eat pieces are available at vegetable sections of convenience stores, supermarkets or the like. Such fruits and vegetables is previously washed, sterilized and packed in bags or the like.
It is important for the fruits and vegetables sold in such a state to be sufficiently sterilized in order to prevent multiplication of bacteria and food decay. A method using sodium chlorite has been developed as a method for sterilizing the fruits and vegetables (see Patent Literatures 1 to 3).

### CITATION LIST

### PATENT LITERATURE

Patent Literature 1: Japanese Patent Laid-Open No. 2004-135631
Patent Literature 2: Japanese Patent Laid-Open No. 2005-323521
Patent Literature 3: Japanese Patent Laid-Open No. 2006-61069

### SUMMARY OF INVENTION

### TECHNICAL PROBLEM

In a conventional method for sterilizing fruits and vegetables using sodium chlorite, chlorine water having a quite high concentration of several 100 ppm is used. Fruits and vegetables is effectively sterilized by being soaked in the high-concentration chlorine water. Unfortunately, a residual chlorine concentration on surfaces of the fruits and vegetables sterilized by the method becomes extremely high. The residual chlorine concentration can be reduced by reducing the chlorine concentration of the chlorine water in which the fruits and vegetables is soaked. However, the reduction of the chlorine concentration reduces a sterilizing power, leading to a failure in certainly and stably sterilizing the fruits and vegetables. As for the fruits and vegetables sterilized by being soaked in the high-concentration chlorine water, the residual chlorine concentration can also be reduced by sufficient water washing. The method however requires much time and trouble in the water washing process. Further, when the residual chlorine concentration on the surfaces is reduced by the water washing, multiplication of bacteria thereafter is disadvantageously accelerated.

The present invention has been made in order to solve the problems. An important object of the present invention is to provide a method for sterilizing fruits and vegetables in which fruits and vegetables can be quite efficiently sterilized by chlorine water having a quite low concentration, and further multiplication of bacteria in the sterilized fruits and vegetables can be effectively prevented while a residual chlorine concentration in the sterilized fruits and vegetables is significantly reduced.

### SOLUTION TO PROBLEM AND ADVANTAGEOUS EFFECTS OF INVENTION

A method for sterilizing fruits and vegetables according to the present invention includes: irradiating a surface of fruits and vegetables with ultraviolet-A (UVA), while the surface of the fruits and vegetables is in contact with chlorine water containing sodium chlorite having a chlorine concentration of 5 ppm or more.

According to the above method for sterilizing fruits and vegetables, the fruits and vegetables can be quite efficiently sterilized by chlorine water having a quite low concentration, that is 5 ppm or more, slightly higher than that of tap water. Further, multiplication of bacteria in the sterilized fruits and vegetables can be effectively prevented, while a residual chlorine concentration in the sterilized fruits and vegetables is significantly reduced.

Although the method of the present invention uses the chlorine water having a quite low concentration of only 6 ppm, the method can achieve a sterilizing power equal to one obtained by a conventional method using sodium chlorite having a chlorine concentration of 200 ppm. Thus, according to the method of the present invention, fruits and vegetables can be certainly sterilized with a chlorine concentration one thirtieth as quite low as the conventional chlorine concentration.

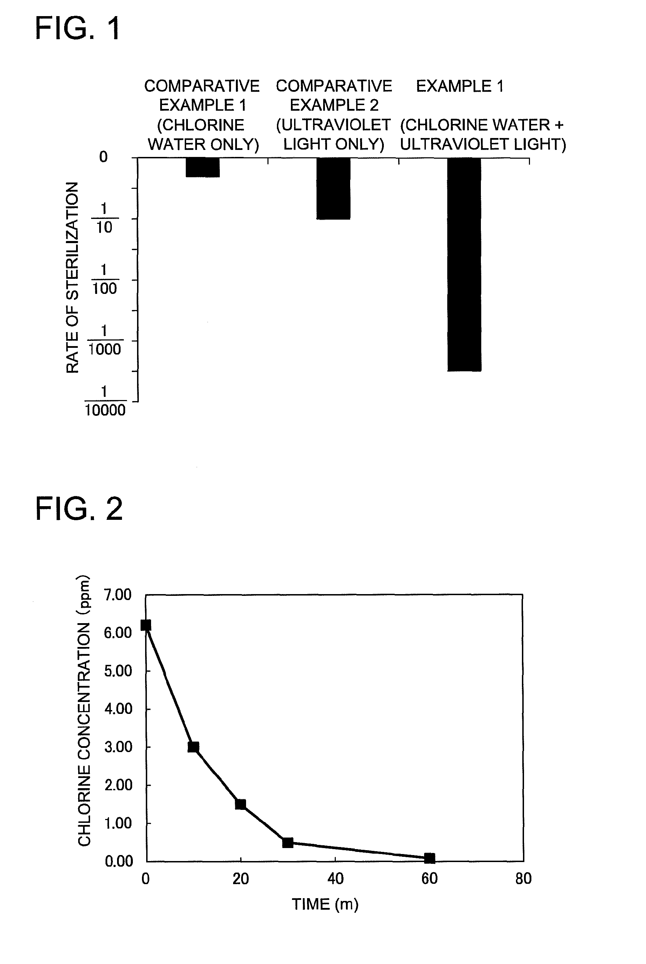

Figure 1 shows a rate of sterilization using only chlorine water, a rate of sterilization using only UVA and a rate of sterilization obtained by UVA irradiation with contact of chlorine water. As shown in the figure, the rates of sterilization using only chlorine water and only UVA are on the order of 1/10. On the contrary, the rate of sterilization using both of chlorine water and UVA irradiation is 1/3000 or less, providing an extremely excellent rate of sterilization. Note that the figure shows the rates of sterilization obtained by the following procedure. Surfaces of cut lettuce come into contact with chlorine water of 6 ppm, and are then irradiated with ultraviolet light of 365 nm having an intensity of approximately 10 mW/cm² for 60 minutes while being rotated in a container allowing UVA to pass through.

Further, according to the above method for sterilizing fruits and vegetables, an excellent rate of sterilization is achieved by a combined effect of the UVA irradiation and the chlorine water having the quite low chlorine concentration, as well as the chlorine concentration on the surface of the fruits and vegetables can be significantly reduced. This is because the UVA for irradiation decomposes sodium chlorite into oxygen and NaCl, while the excellent rate of sterilization is achieved by the chlorine water and UVA.
Figure 2 shows a decrease of residual chlorine concentration on the surface of the fruits and vegetables. As shown in the figure, the residual chlorine concentration of the chlorine water in contact with the surfaces of the cut lettuce decreases up to approximately 0 ppm after 60 minutes. That is, the residual chlorine concentration on the surfaces of the cut lettuce decreases up to approximately 0 ppm after 60 minutes when the cut lettuce is nearly completely sterilized. The sterilized cut lettuce can therefore be packed as it is for sale.

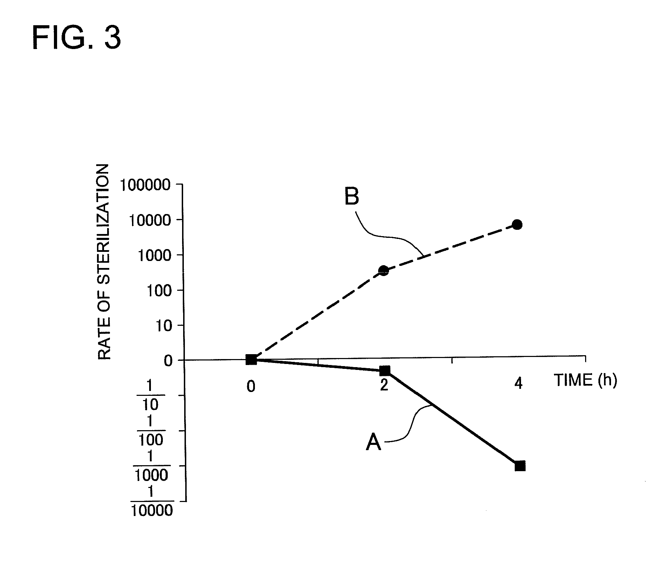

Further, Figure 3 reveals that fruits and vegetables sterilized by the above method is maintained in a sterilized state, and that multiplication of bacteria can be effectively prevented. In the figure, a curve A indicates a rate of sterilization on a surface of the fruits and vegetables sterilized by the method of the present invention. A curve B indicates a rate of sterilization on a surface of the fruits and vegetables sterilized by a conventional method, that is, sterilized by chlorine water of 200 ppm. As shown in the figure, the fruits and vegetables sterilized by the method of the present invention is maintained in a sterilized state without multiplication of bacteria after 4 hours. On the contrary, as for the fruits and vegetables sterilized by the conventional method, the number of bacteria gradually increases, as indicated by the curve B. Note that the figure shows variations of the rates of sterilization at 25°C in the fruits and vegetables sterilized by the method of the present invention and by the conventional chlorine water of 200 ppm.

Further, according to the method for sterilizing fruits and vegetables of the present invention, fruits and vegetables is effectively sterilized by UVA irradiation in contact with the chlorine water, thereby achieving the effective sterilization while deterioration or discoloration of the fruits and vegetables is prevented.

According to the method for sterilizing fruits and vegetables of the present invention, a peak wavelength of UVA for irradiating a surface of fruits and vegetables can be 360 nm or more and 404 nm or less.
According to the above sterilization method, fruits and vegetables can be effectively sterilized without discoloration.

According to the method for sterilizing fruits and vegetables of the present invention, the chlorine concentration of the chlorine water in contact with the surface of the fruits and vegetables can be 5 ppm to 30 ppm.
According to the above sterilization method, fruits and vegetables can be effectively sterilized with the low residual chlorine concentration.

According to the method for sterilizing fruits and vegetables of the present invention, an intensity of ultraviolet light for irradiating the surface of the fruits and vegetables can be 5 mW/cm² or more.
According to the above sterilization method, effective sterilization can be performed by the UVA for irradiating the fruits and vegetables in contact with the chlorine water.

According to the method for sterilizing fruits and vegetables of the present invention, an irradiation time during which the surface of the fruits and vegetables is irradiated with the UVA can be 30 minutes or more.
According to the above sterilization method, fruits and vegetables can be effectively sterilized by the UVA irradiation.

According to the method for sterilizing fruits and vegetables of the present invention, fruits and vegetables to be sterilized can include a cut vegetable.
According to the above sterilization method, a whole surface of the vegetable of the fruits and vegetables can be effectively sterilized.

According to the method for sterilizing fruits and vegetables of the present invention, fruits and vegetables to be sterilized can be irradiated with UVA while being agitated.
According to the above sterilization method, the whole surface of the fruits and vegetables can be uniformly and efficiently sterilized.

### BRIEF DESCRIPTION OF DRAWINGS

Figure 1 is a graph showing a comparison among rates of sterilization according to a conventional sterilization method and a sterilization method of an embodiment of the present invention.
Figure 2 is a graph showing a variation of a residual chlorine concentration on a surface of fruits and vegetables according to the sterilization method of the embodiment of the present invention.
Figure 3 is a graph showing a comparison between variations of rates of sterilization after the sterilization is performed according to the conventional sterilization method and the sterilization method of the embodiment of the present invention.
Figure 4 is a schematic view showing one example of an apparatus for sterilization used for a sterilization method of one embodiment of the present invention.
Figure 5 is a schematic view showing another example of the apparatus for sterilization used for the sterilization method of one embodiment of the present invention.
Figure 6 is a schematic view showing an apparatus for producing acidic hypochlorous acid water used for the present invention.

### DESCRIPTION OF EMBODIMENTS

Hereinafter, an embodiment of the present invention will be described with reference to the drawings. The embodiment described below is deemed to be merely illustrative of a method for sterilizing fruits and vegetables for giving a concrete form to the technical idea of the present invention, and therefore, the present invention does not limited the method for sterilizing fruits and vegetables to the following method and conditions. Further, in the description, components set forth in Claims are never limited to components in the embodiment.

According to a sterilization method of the present invention, fruits and vegetables is sterilized. Hereinafter, fruits and vegetables to be sterilized is referred to as a cut vegetable, providing detailed description. However, in the sterilization method of the present invention, the fruits and vegetables to be sterilized is not limited to the cut vegetables and includes all kinds of fruits and vegetables such as cut fruits, uncut fruits and uncut vegetables.

According to the sterilization method of the present invention, a surface of fruits and vegetables is irradiated with UVA in contact with chlorine water containing sodium chlorite having a specific chlorine concentration. By applying chlorine water on the surface of the fruits and vegetables or soaking the fruits and vegetables in chlorine water, the surface of the fruits and vegetables can come into contact with the chlorine water. The fruits and vegetables in contact with the chlorine water containing sodium chlorite is irradiated with UVA to generate oxygen according to the following reaction formula for sterilization.

[Formula 1] *2NaClO* → *2NaCl* + *O*₂ ↑

The reaction formula shows a state where oxygen is generated by UVA irradiation. As indicated by the reaction formula, the UVA for irradiation decomposes the sodium chlorine into NaCl and oxygen with the passage of time, thereby increasing an oxygen concentration. The UVA for irradiating the fruits and vegetables soaked in chlorine water passes through the chlorine water, decomposes the chlorine water and sterilizes the fruits and vegetables in the contact area with the surface of the fruits and vegetables.

A chlorine concentration of the chlorine water on the surface of the fruits and vegetables is higher than 5 ppm. With chlorine water having a concentration lower than 5 ppm, sterilization cannot effectively performed even if the surface of the fruits and vegetables is irradiated with UVA in contact with the chlorine water. A sterilizing power can be enhanced by increasing the chlorine concentration. However, increasing the chlorine concentration causes a residual chlorine concentration in the sterilized fruits and vegetables to increase. Accordingly, the chlorine concentration is preferably lower than 30 ppm, further preferably lower than 20 ppm, and further more preferably lower than 15 ppm.

Further, as for the UVA for irradiating the fruits and vegetables in contact with the chlorine water, a wavelength thereof is preferably longer than 360 nm and shorter than 404 nm. The UVA within this wavelength region efficiently sterilizes fruits and vegetables without deterioration or discoloration. With the wavelength of the UVA shorter than 360 nm, fruits and vegetables disadvantageously deteriorates or discolors. On the other hand, with the wavelength of the UVA longer than 404 nm, the sterilizing power is reduced.

As for the ultraviolet light for irradiating the fruits and vegetables, an intensity of the ultraviolet light at a position of the fruits and vegetables is preferably approximately 10 mW/cm². Since the intensity of the ultraviolet light can be reduced by prolonging an irradiation time, the intensity of the ultraviolet light can be 1 mW/cm² or more, preferably 3 mW/cm² or more, and further preferably 5 mW/cm² or more. Increasing the intensity of the ultraviolet light can enhance a rate of sterilization. However, in order to increase the intensity of the ultraviolet light, an output of an LED used for a light source and the number of the LEDs need to be increased, leading to increase in cost of the light source and power consumption. The intensity of the ultraviolet light is therefore, for example, 100 mW/cm² or less, preferably 50 mW/cm² or less, and further preferably 30 mW/cm² or less, considering cost of the light source and power consumption.

The irradiation time is set at an optimal value, considering the intensity of the ultraviolet light and a required rate of sterilization. For example, the rate of sterilization can be 99% or more with the chlorine concentration of 6 ppm, the intensity of UVA of 10 mW/cm² and the irradiation time of 60 minutes. Accordingly, the irradiation time is 10 minutes to 5 hours, preferably 30 minutes to 3 hours, and further preferably 30 minutes to 2 hours, considering the intensity of the ultraviolet light.

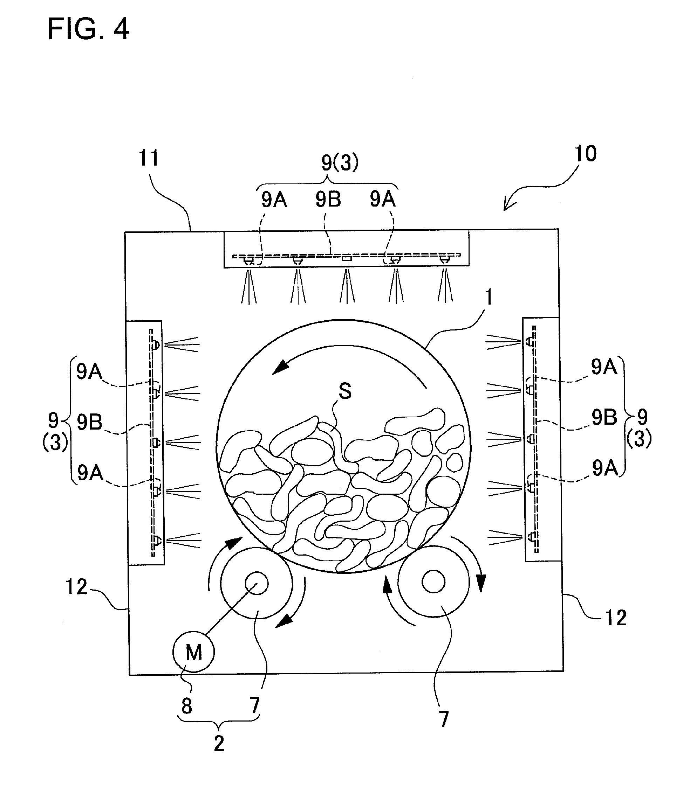

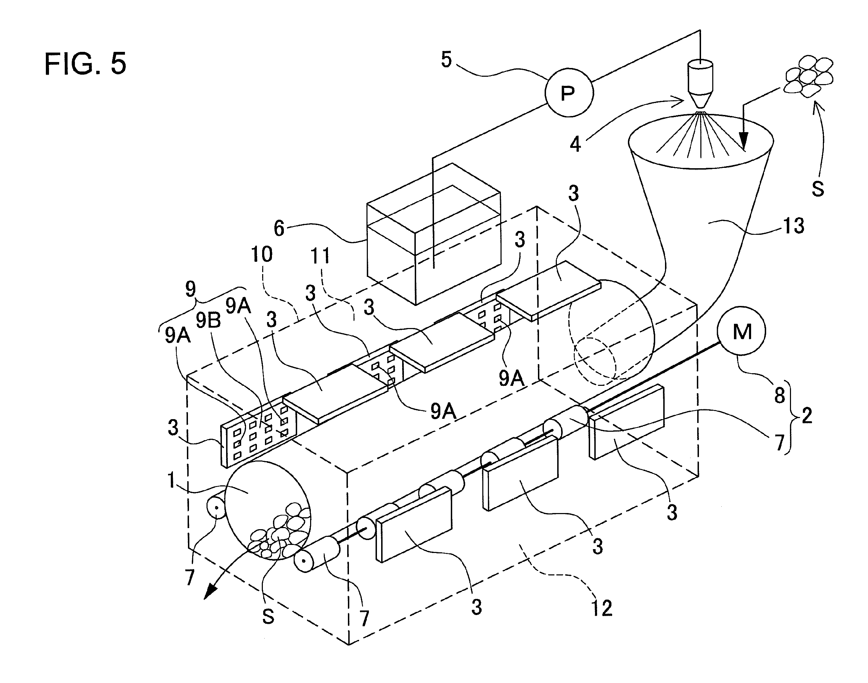

Figures 4 and 5 show apparatuses for sterilization used for the sterilization method of the present invention. An apparatus for sterilization in Figure 4 is a batch-type apparatus for sterilizing fruits and vegetables, while Figure 5 shows an apparatus for continuously sterilizing fruits and vegetables. Each of the apparatuses for sterilization in the figures includes an agitator 1 containing and agitating fruits and vegetables S, a driving mechanism 2 rotating the agitator 1 to agitate the contained fruits and vegetables S and UVA light sources 3 irradiating the fruits and vegetables S contained in the agitator 1 with UVA. The apparatus for sterilization in Figure 5 further includes a nozzle 4 sprinkling chlorine water on the fruits and vegetables S contained in the agitator 1, a pump 5 supplying the chlorine water to the nozzle 4, and a chlorine-water tank 6 connected to an absorption side of the pump 5 and supplying the chlorine water to the pump 5.

The agitator 1 rotates to agitate the contained fruits and vegetables S. The agitator 1 further has translucency allowing UVA to pass through in order to have the contained fruits and vegetables S irradiated with the UVA emitted from the UVA light sources 3 provided outside the agitator 1. The agitator 1 is made of glass allowing the UVA to pass through, or a net material or a perforated plate with a large number of through holes allowing light to pass through. Each of the agitators 1 in the figures is placed on rolls 7 to rotate with a rotation axis thereof in a horizontal direction.

The agitator 1 in the Figure 4 is a glass bottle allowing UVA to pass through. One end thereof is provided with an open/close lid (not shown) for taking the fruits and vegetables S in and out. The agitator 1 contains and rotates the fruits and vegetables S together with chlorine water, and sterilizes the fruits and vegetables S by UVA irradiation while agitating the fruits and vegetables S. The open/close lid is opened for taking out the sterilized fruits and vegetables S. The agitator 1 of the glass bottle is supplied with chlorine water together with the fruits and vegetables S and sterilizes the fruits and vegetables S by agitation with the surface of the fruits and vegetables S in contact with the chlorine water.

The agitator 1 in Figure 5 has a cylindrical shape with both ends thereof open. The agitator 1 is inclined from a supply side to a discharge side at a falling gradient, and transfers the contained fruits and vegetables to the discharge side, while agitating the fruits and vegetables by the rotation. The agitator 1 transfers the contained fruits and vegetables S to the discharge side, while agitating the fruits and vegetables S by the rotation. This agitator 1 is also made of glass allowing the UVA to pass through. The agitator is also made of a metal net or a perforated plate, thereby allowing the UVA to pass through. Further, the agitator can be formed into a cylinder made of a metal plate having no translucency, and an UVA light source can be provided inside thereof. Thus obtained agitator can reduce an amount of UVA leaking out of the cylinder. Moreover, by mirror finishing an inner surface of the cylinder made of the metal plate, the fruits and vegetables can be efficiently irradiated with ultraviolet light from the UVA light source provided inside the cylinder.

The glass agitator 1 is supplied with chlorine water together with the fruits and vegetables S on the supply side, and can perform irradiation with UVA while agitating the fruits and vegetables S with the surface thereof in contact with the chlorine water. The agitator made of a metal net or a perforated plate performs sterilization by UVA irradiation, while rotating and agitating the cut vegetables of the fruits and vegetables. Meanwhile, the agitator allows the chlorine water to pass through and can discharge the chlorine water. This agitator transfers the cut vegetables of the fruits and vegetables, while discharging the chlorine water on the surfaces of the cut vegetables. However, the chlorine water on the surfaces of the cut vegetables is not completely discharged, and the cut vegetables are rotated and transferred for sterilization. Since the agitator can drain and discharge the sterilized cut vegetables of the fruits and vegetables, the discharged cut vegetables can be packed without draining.

The driving mechanism 2 includes a pair of rolls 7 having the agitator 1 placed thereon and rotating the agitator 1, and a motor 8 rotating the rolls 7. The pair of rolls 7 has the agitator 1 placed therebetween and rotates the agitator 1. According to such a structure of the driving mechanism 2, the agitator 1 can be stably rotated with a simple structure.

The driving mechanism 2 in Figure 4 rotates the agitator 1 with a rotation axis of the agitator 1 in a horizontal direction. The driving mechanism 2 in Figure 5 rotates the agitator 1 with a rotation axis of the agitator 1 inclined from the supply side to the discharge side at a falling gradient. The above agitators 1 and driving mechanisms 2 can efficiently sterilize the whole fruits and vegetables in the agitator 1 by smoothly agitating the fruits and vegetables without causing damage. The agitator can also agitate the contained fruits and vegetables such as cut vegetables by rotating with the rotation axis in a vertical direction.

The UVA light sources 3 correspond to LED light sources 9 fixed outside the agitator 1 and to an inner surface of an outer case 10. The LED light source 9 has a plurality of LEDs 9A fixed to a circuit board 9B. The LED light source 9 causes UVA emitted from the respective LEDs 9A to pass through the agitator 1, thereby irradiating the fruits and vegetables S of the cut vegetables. Each of the apparatuses for sterilization in Figures 4 and 5 is fixed to a ceiling 11 and side plates 12 on both sides of the outer case 10. The LED light source 9 includes an ultraviolet LED emitting UVA of 360 nm to 404 nm. In the LED light source 9, by adjusting the number of the ultraviolet LEDs and an output of each ultraviolet LED, for example, an intensity of the ultraviolet light emitted to the fruits and vegetables S is preferably adjusted to approximately 10 mW/cm², as described above. Note that fruits and vegetables can be sterilized with the intensity of the ultraviolet light from the LED light source of 1 mW/cm² to 100mW/cm².

The apparatus for sterilization in Figure 5 supplies chlorine water to the cut vegetables of the fruits and vegetables S by sprinkling the chlorine water from the nozzle 4. The nozzle 4 turns the chlorine water supplied from the pump 5 into mist and sprinkles the mist on the surfaces of the fruits and vegetables S, and thereby the chlorine water adheres on the surfaces of the fruits and vegetables S. The apparatus for sterilization in Figure 5 is provided with a hopper 13 on the supply side of the agitator 1 and spays the chlorine water to the cut vegetables of the fruits and vegetables S supplied to the hopper 13.

### EXAMPLE 1

The apparatus for sterilization in Figure 4 is used for sterilizing cut vegetables of 400 g. As for this apparatus for sterilization, the agitator 1 of a cylindrical glass bottle having an outer diameter of 21 cm and a length of 20 cm is rotated for one hour at a rotation speed of 5 to 20 rpm. The agitator 1 is irradiated with UVA of 360 nm from an ultraviolet LED so as to have an intensity of ultraviolet light inside of approximately 10 mW/ cm². The agitator 1 is provided inside with the cut vegetables of 400 g and chlorine water of 2 l. The cut vegetables refer to shredded cabbage. The chlorine water is obtained by adding sodium chlorite to water to have a chlorine concentration of 6 ppm.

In the cut vegetables sterilized by the above apparatus for sterilization, sterilization is quite effectively performed to the extent that the number of bacteria becomes 1/3000. Further, the sterilization is performed without an odor of chlorine with a residual chlorine concentration of approximately 0 ppm.

### COMPARATIVE EXAMPLE 1

In the above sterilization apparatus, cut vegetables were sterilized in a similar manner to Example 1 except that the UVA irradiation was terminated. As a result, the number of bacteria was reduced only to 1/2.

### COMPARATIVE EXAMPLE 2

In the above sterilization apparatus, UVA was emitted in a similar manner to Example 1 except that water was supplied to the agitator 1 instead of the chlorine water. As a result, the number of bacteria was reduced only to approximately 1/10, resulting in a little sterilization effect.

Figure 1 shows results of Example 1, and Comparative Examples 1 and 2. The results reveal that the sterilization method according to the present invention can reduce the number of bacteria to approximately on the order of 1/3000, providing an extremely effective sterilization by a combined effect of chlorine water having an quite low concentration and irradiation with UVA having a specific wavelength, on the contrary, the method using only chlorine water or only UVA could reduce the number of bacteria only to on the order of 1/10. Moreover, the UVA for sterilization decomposes sodium chlorite into NaCl and oxygen, proving an ideal state with a residual chlorine concentration of approximately 0 ppm.

As for the above method and apparatus for sterilizing fruits and vegetables, a surface of the fruits and vegetables is irradiated with UVA for sterilizing the fruits and vegetables with the surface thereof in contact with chlorine water containing sodium chlorite.
The surface of the fruits and vegetables may be irradiated with UVA for sterilizing the fruits and vegetables with the surface thereof in contact with acidic hypochlorous acid water having a chlorine concentration of 0.01 ppm or more, instead of the chlorine water. The acidic hypochlorous acid water used for the method and apparatus for sterilizing fruits and vegetables refers to strongly acidic hypochlorous acid water obtained by electrolyzing water containing NaCl, or slightly acidic hypochlorous acid water obtained by mixing the strongly acidic hypochlorous acid water and alkaline electrolyzed water.

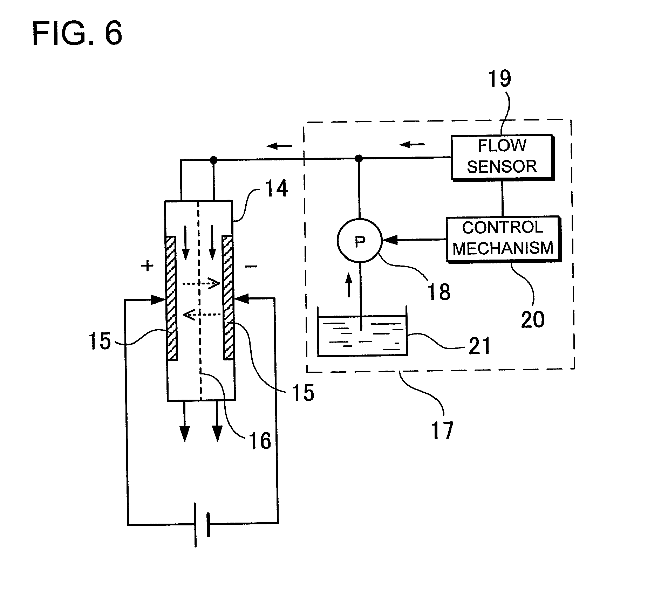

Figure 6 shows an apparatus for producing acidic hypochlorous acid water in which strongly acidic hypochlorous acid water and slightly acidic hypochlorous acid water is produced by electrolyzing water containing NaCl. The production apparatus is provided with positive and negative electrodes 15 opposed and insulated each other inside a watertight electrolytic cell 14. A diaphragm 16 allowing ions to pass through is provided between the positive and negative electrodes 15, and thereby the diaphragm 16 partitions the inside of the electrolytic cell 14 into a positive side and a negative side. Water containing NaCl is supplied to the electrolytic cell 14 from a feeder 17. The supplied water turns into strongly acidic hypochlorous acid water on the positive side of the electrolytic cell 14 and into alkaline electrolyzed water on the negative side thereof to be discharged. The production apparatus in the figure continuously supplies the water containing NaCl to the electrolytic cell to continuously discharge the strongly acidic hypochlorous acid water and the alkaline electrolyzed water.

The water containing NaCl supplied to the electrolytic cell 14 is electrolyzed between the electrodes in the electrolytic cell 14 to be discharged as strongly acidic hypochlorous acid water from the positive side. The strongly acidic hypochlorous acid water contains hypochlorous acid (HOCI) or chlorine (Cl₂) having an excellent sterilizing power. A chlorine concentration of the strongly acidic hypochlorous acid water can be identified by a salinity of the water supplied to the electrolytic cell 14 and a magnitude of a current flowing between the electrodes. More specifically, the chlorine concentration of the strongly acidic hypochlorous acid water can be identified by the salinity of the water supplied to the electrolytic cell 14, the magnitude of the current flowing between the electrodes 15, opposing areas of the electrodes 15, an interval between the electrodes 15 and an amount of the water supplied to the electrolytic cell 14. The chlorine concentration of the strongly acidic hypochlorous acid water can be increased by increasing the salinity of the water supplied to the electrolytic cell 14 and the current between the electrodes. The chlorine concentration of the strongly acidic hypochlorous acid water is therefore adjusted within a set range by adjusting the salinity and the amount of the water supplied to the electrolytic cell, the current between the electrodes in the electrolytic cell, and the like.

Further, as for the slightly acidic hypochlorous acid water obtained by mixing the strongly acidic hypochlorous acid water and alkaline electrolyzed water, a chlorine concentration thereof is identified by the chlorine concentration of the strongly acidic hypochlorous acid water mixed to the alkaline electrolyzed water. The chlorine concentration of the slightly acidic hypochlorous acid water can be increased by increasing the chlorine concentration of the strongly acidic hypochlorous acid water to be mixed. The chlorine concentration of the slightly acidic hypochlorous acid water is therefore adjusted within a set range by adjusting the chlorine concentration of the strongly acidic hypochlorous acid water, that is, the salinity and the amount of the water supplied to the electrolytic cell, the current between the electrodes in the electrolytic cell, and the like.

The salinity of the water containing NaCl supplied to the electrolytic cell 14 is controlled at the water feeder 17. The water feeder 17 includes a constant flow pump 18 adding salt water having a predetermined salinity, a flow sensor 19 detecting an amount of water supplied to the electrolytic cell 14, a control mechanism 20 controlling the constant flow pump 18 by the flow rate detected by the flow sensor 19, and a salt-water tank 21 connected to an absorption side of the constant flow pump. The control mechanism 20 causes the flow sensor 19 to detect a flow rate supplied to the electrolytic cell 14, controls the constant flow pump 18 so as to supply salt water in proportion to the detected flow rate, and supplies salt water having a constant salinity to the electrolytic cell 14. The salt-water tank 21 stores salt water of, for example, 0.01 to 1 % by weight and preferably 0.02 to 0.5 % by weight. The salinity of the salt water supplied to the electrolytic cell 14 is controlled by controlling the flow rate of the constant flow pump 18. The flow rate of the constant flow pump 18 is controlled by the control mechanism 20 so that a concentration of NaCl supplied to the electrolytic cell 14 becomes, for example, 0.0002 to 0.02 % by weight and preferably 0.0005 to 0.01 % by weight.

Water having the above salinity is supplied to the electrolytic cell 14, turned into the strongly acidic hypochlorous acid water and alkaline electrolyzed water, and then discharged. The chlorine concentration of the strongly acidic hypochlorous acid water can be approximately 1 to 100 ppm with salinity of the water supplied to the electrolytic cell 14 of 0.0002 to 0.02 % by weight. The water having this salinity is supplied to the electrolytic cell 14, and the strongly acidic hypochlorous acid water and the alkaline electrolyzed water discharged from the negative side are mixed, and thereby slightly acidic hypochlorous acid water having a chlorine concentration of 0.5 to 50 ppm is also obtained. The acidic hypochlorous acid water sterilizing fruits and vegetables together with UVA can be used for sterilizing fruits and vegetables with the chlorine concentration thereof reduced. Therefore, acidic hypochlorous acid water having the above chlorine concentration is diluted in use. The above production apparatus discharges acidic hypochlorous acid water having a high chlorine concentration. Strongly acidic hypochlorous acid water and slightly acidic hypochlorous acid water having a low chlorine concentration are produced by reducing the salinity of the water supplied to the electrolytic cell 14. Thus obtained acidic hypochlorous acid water can also be used for sterilizing fruits and vegetables without dilution.

The slightly acidic hypochlorous acid water has a low chlorine concentration not more than 1/2 of that of the strongly acidic hypochlorous acid water. However, a sterilizing power equal to that of the strongly acidic hypochlorous acid water is achieved by using UVA together. Thus, the acidic hypochlorous acid water can effectively sterilize fruits and vegetables with a quite low chlorine concentration not less than 0.01 ppm by being used with UVA. Accordingly, in the method for sterilizing fruits and vegetables of the present invention, the chlorine concentration of the acidic hypochlorous acid water on the surface of the fruits and vegetables can be set at an optimal value within a range of, for example, 0.01 ppm or more and 3 ppm or less, preferably 0.03 ppm or more and 1 ppm or less, and further preferably 0.05 ppm or more and 0.5 ppm or less, considering a kind of fruits and vegetables and an intensity of UVA.

### EXAMPLE 2

The following experiment verifies that the strongly acidic hypochlorous acid water having a low chlorine concentration provides an extremely excellent sterilization effect by being used with UVA. Strongly acidic hypochlorous acid water used for this test has a chlorine concentration of 0.25 ppm. The strongly acidic hypochlorous acid water having this chlorine concentration is produced by the following procedure. Water containing NaCl with a salinity of 0.002 % by weight is supplied to the electrolytic cell. The water is electrolyzed to obtain strongly acidic hypochlorous acid water having a chlorine concentration of 12.5 ppm. The strongly acidic hypochlorous acid water is then diluted 50-fold.

A sterilization power of the strongly acidic hypochlorous acid water having the above chlorine concentration is measured by the following steps.
1. A mixed solution is prepared by mixing 100 µl (microliter) of a bacterial culture having OD₆₀₀1.0 and 900 µl (microliter) of the strongly acidic hypochlorous acid water having the chlorine concentration of 0.25 ppm.
2. 250 µl (microliter) of the mixed solution is poured into respective wells of a 96-well (8 in a column x 12 in a row) plate having an external shape of 8 cm in length and 12.5 cm in width. The 96-well plate is continuously irradiated with UVA for 10 minutes.
   Ultraviolet light is emitted from four of the ultraviolet LEDs that emit UVA having a peak wavelength of 360 nm. A current of the ultraviolet LED is 100 mA, an interval between the ultraviolet LED and the well is 7 mm, and an intensity of the ultraviolet light on the surface of the well is approximately 50 mW/cm².

According to the above method, sterilization is quite effectively performed to the extent that the number of bacteria becomes 10^{-5.71} (approximately 1/500000). Note that the number of bacteria becomes 10^{-1.97} (approximately 1/100) under the same conditions except that UVA is not emitted. Further, according to a method for UVA irradiation using phosphate-buffered physiological saline instead of the strongly acidic hypochlorous acid water, the number of bacteria becomes 10^{-2.3} (approximately 1/200). Therefore, according to the sterilization method using the strongly acidic hypochlorous acid water together with UVA, a sterilization power becomes 10^{3.74} times (approximately 5500 times) as strong as that of in the method using the strongly acidic hypochlorous acid water without UVA irradiation, and 10^{3.41} times (approximately 2600 times) as strong as that of in the method for UVA irradiation without using the strongly acidic hypochlorous acid water.

### EXAMPLE 3

The following experiment verifies that the slightly acidic hypochlorous acid water having a low chlorine concentration provides an extremely excellent sterilization effect by being used with UVA. Slightly acidic hypochlorous acid water used for this test has a chlorine concentration of 0.1 ppm. The slightly acidic hypochlorous acid water having this chlorine concentration is obtained by the following procedure for use. Water containing NaCl with a salinity of 0.002 % by weight is supplied to the electrolytic cell. The water is electrolyzed to produce strongly acidic hypochlorous acid water and slightly acidic hypochlorous acid water, followed by mixing these acidic hypochlorous acid water. Thus obtained mixed water is then diluted 50-fold.

A sterilization power of the slightly acidic hypochlorous acid water having the above chlorine concentration is measured by the following steps.
1. A mixed solution is prepared by mixing 100 µl (microliter) of a bacterial culture having OD₆₀₀1.0 and 900 µl (microliter) of the slightly acidic hypochlorous acid water having the chlorine concentration of 0.1 ppm.
2. 250 µl (microliter) of the mixed solution is poured into respective wells of a 96-well (8 in a column x 12 in a row) plate having an external shape of 8 cm in length and 12.5 cm in width. The 96-well plate is continuously irradiated with UVA for 10 minutes.
   Ultraviolet light is emitted from four of the ultraviolet LEDs that emit UVA having a peak wavelength of 360 nm. A current of the ultraviolet LED is 100 mA, an interval between the ultraviolet LED and the well is 7 mm, and an intensity of the ultraviolet light on the surface of the well is approximately 50 mW/cm².

According to the above method, sterilization is quite effectively performed to the extent that the number of bacteria becomes 10^{-5.16} (approximately 1/150000). Note that the number of bacteria becomes 10^{-1.49} (approximately 1/30) under the same conditions except that UVA is not emitted. Therefore, according to the sterilization method using the slightly acidic hypochlorous acid water together with UVA, a sterilization power becomes 10^{3.67} times (approximately 4700 times) as strong as that of in the method using the slightly acidic hypochlorous acid water without UVA irradiation, and 10^{2.86} times (approximately 700 times) as strong as that of in the method for UVA irradiation without using the slightly acidic hypochlorous acid water.

### REFERENCE SIGNS LIST

- 1: agitator
- 2: driving mechanism
- 3: UVA light source
- 4: nozzle
- 5: pump
- 6: chlorine-water tank
- 7: roll
- 8: motor
- 9: LED light source
- 9A: LED
- 9B: circuit board
- 10: outer case
- 11: ceiling
- 12: side plate
- 13: hopper
- S: fruits and vegetables
- 14: electrolytic cell
- 15: electrode
- 16: diaphragm
- 17: feeder
- 18: constant flow pump
- 19: flow sensor
- 20: control mechanism
- 21: salt-water tank

## Claims

1. A method for sterilizing fruits and vegetables comprising:
irradiating a surface of fruits and vegetables with UVA, while the surface of the fruits and vegetables is in contact with chlorine water containing sodium chlorite having a chlorine concentration of 5 ppm or more.

2. The method for sterilizing fruits and vegetables according to claim 1, wherein a peak wavelength of UVA for irradiating the surface of the fruits and vegetables is 360 nm or more and 404 nm or less.

3. The method for sterilizing fruits and vegetables according to claim 1 or 2, wherein a chlorine concentration of the chlorine water in contact with the surface of the fruits and vegetables is 5 ppm to 30 ppm.

4. The method for sterilizing fruits and vegetables according to any one of claims 1 to 3, wherein an intensity of ultraviolet light for irradiating the surface of the fruits and vegetables is 5 mW/cm² or more.

5. The method for sterilizing fruits and vegetables according to any one of claims 1 to 4, wherein an irradiation time during which the surface of the fruits and vegetables is irradiated with the UVA is 30 minutes or more.

6. The method for sterilizing fruits and vegetables according to any one of claims 1 to 5, wherein fruits and vegetables to be sterilized includes a cut vegetable.

7. The method for sterilizing fruits and vegetables according to any one of claims 1 to 6, wherein fruits and vegetables to be sterilized is irradiated with UVA while being agitated.

8. A method for sterilizing fruits and vegetables comprising:
irradiating a surface of fruits and vegetables with UVA, while the surface of the fruits and vegetables is in contact with acidic hypochlorous acid water having a chlorine concentration of 0.01 ppm or more.

9. The method for sterilizing fruits and vegetables according to claim 8, wherein the acidic hypochlorous acid water is slightly acidic hypochlorous acid water obtained by electrolyzing water containing NaCl.

10. The method for sterilizing fruits and vegetables according to claim 8, wherein the acidic hypochlorous acid water is slightly acidic hypochlorous acid water of mixed water including slightly acidic hypochlorous acid water and alkaline electrolyzed water obtained by electrolyzing the water containing NaCl.

11. The method for sterilizing fruits and vegetables according to any one of claims 8 to 10, wherein a peak wavelength of UVA for irradiating the surface of the fruits and vegetables is 360 nm or more and 404 nm or less.

12. The method for sterilizing fruits and vegetables according to any one of claims 8 to 12, wherein a chlorine concentration of the chlorine water in contact with the surface of the fruits and vegetables is 5 ppm to 30 ppm.

13. The method for sterilizing fruits and vegetables according to any one of claims 8 to 12, wherein an intensity of ultraviolet light for irradiating the surface of the fruits and vegetables is 5 mW/cm² or more.

14. The method for sterilizing fruits and vegetables according to any one of claims 8 to 13, wherein an irradiation time during which the surface of the fruits and vegetables is irradiated with the UVA is 30 minutes or more.

15. The method for sterilizing fruits and vegetables according to any one of claims 8 to 14, wherein fruits and vegetables to be sterilized includes a cut vegetable.

16. The method for sterilizing fruits and vegetables according to any one of claims 8 to 15, wherein fruits and vegetables to be sterilized is irradiated with UVA while being agitated.

17. An apparatus for sterilizing fruits and vegetables comprising:
an agitator 1 containing and agitating fruits and vegetables S;
a driving mechanism 2 rotating the agitator 1 to agitate the contained fruits and vegetables S;
a UVA light source 3 irradiating the fruits and vegetables S contained in the agitator 1 with UVA; and
a nozzle 4 sprinkling chlorine water containing sodium chlorite having a chlorine concentration of 5 ppm or more, or acidic hypochlorous acid water having a chlorine concentration of 0.01 ppm or more on the fruits and vegetables S contained in the agitator 1.

18. The apparatus for sterilizing fruits and vegetables according to claim 17, wherein the agitator 1 is made of glass allowing UVA to pass through, or a net material or a perforated plate with a large number of through holes allowing light to pass through.

19. The apparatus for sterilizing fruits and vegetables according to claim 17 or 18, wherein the agitator 1 having a cylindrical shape with both ends thereof open is inclined from a supply side to a discharge side at a falling gradient, and transfers the contained fruits and vegetables to the discharge side, while agitating the fruits and vegetables by rotation.

20. The apparatus for sterilizing fruits and vegetables according to any one of claims 17 to 19, wherein the LED light source 9 includes an ultraviolet LED emitting UVA of 360 nm to 404 nm.
